# EUROPEAN PATENT SPECIFICATION

(11) **EP 0 393 249 B1**
(45) Date of publication and mention of the grant of the patent: **03.03.1993**
(21) Application number: 89124114.3
(22) Date of filing: 28.12.1989
(51) Int. Cl.: F02M 35/10, F02B 27/02

(54) **Air intake system for a multicylinder combustion engine**
Lufteinlasssystem für eine Mehrzylinderbrennkraftmaschine
Système d'admission d'air pour un moteur à combustion à plusieurs cylindres

(30) Priority: 20.04.1989 JP 101447/89
(43) Date of publication of application: 24.10.1990
(73) Proprietor: YAMAHA HATSUDOKI KABUSHIKI KAISHA, Iwata-shi Shizuoka-ken, 438 (JP)
(72) Inventor: Yamada, Tetsuro, Iwata-gun Shizuoka-ken (JP)
(74) Representative: Patentanwälte Hauck, Graalfs, Wehnert, Döring, Siemons

(56) References cited:
- US-A- 4 244 333
- US-A- 4 304 211
- US-A- 4 765 285
- PATENT ABSTRACTS OF JAPAN vol. 11, no. 364 (M-646)(2811) 27 November 1987,& JP-A-62 139960 (YAMAHA MOTOR CO LTD) 23 June 1987,
- PATENT ABSTRACTS OF JAPAN vol. 11, no. 78 (M-570)(2525) 10 March 1987,& JP-A-61 234223 (YAMAHA MOTOR CO LTD) 18 October 1986,

## Description

The present invention relates to an air intake system for a multi-cylinder combustion engine having a plurality of air intake passages, each being connected to a cylinder and each provided with a throttle valve.

So far it has been known an air intake system for a multi-cylinder engine comprising air intake passages each leading to the combustion chamber of each cylinder and each provided with a throttle valve, communicating passages each connecting one of said intake passages, at its portion downstream of said throttle valve, with a pressure regulating tank, and control valves each installed within each of said communicating passages to be operated so that their opening may be increased within the low-opening range of said throttle valve (e.g., Japanese Provisional Patent Publication S62-139960).

In this system, the opening of the control valves is increased during low load engine operation when the throttle valve opening is small, especially while idling, through which each air intake is communicated, at its portion downstream of the throttle valve, with the pressure regulating tank to reduce the pressure fluctuation and to average mixture concentration within the air intake passage, and thereby to stabilize combustion. Besides, during high load engine operation when the throttle valve is widely opened to increase engine output, the opening of the control valve is reduced thereby to limit the flow of the mixture into the pressure regulating tank while the throttle valve is opened, to limit the flow of the mixture within the pressure regulating tank into the combustion chamber while the throttle valve is opened, and thus to improve operational responsiveness of the throttle valve 20.

Further it has been known another intake system for a multi-cylinder engine comprising a bypass passage for communicating portions of each air intake passage upstream and downstream of its throttle valve, incorporated with an open-close valve which opens and closes this bypass passage according to the engine operating conditions to control air supply while the throttle valve is closed, e.g., while idling.

In this second prior-art system, the open-close valve is opened while idling with the throttle valve closed thereby to maintain the idling speed constant by supplying a predetermined amount of air, and is closed when the throttle valve is widely opened to increase the engine speed and the engine output.

Hereupon, to employ means for controlling the air amount while the throttle valve is closed according to the engine operating conditions on engines provided with a throttle valve in the air intake passage for each of the cylinder as mentioned above is not desirable because it requires the same number of bypasses and open-close valves as the cylinders and therefore causes costly engines.

After various examinations we found that, paying attention to the fact that, within a low opening range of the throttle valve, the open-close valve is operated to open the bypass passage while the control valve for communicating the pressure regulating tank with the air intake passage is controlled to increase its opening, the bypass passage can be comunicated with the pressure regulating tank.

This inventions has been made taking these points into consideration to provide a simple and inexpensive air intake system for the multi-cylinder engine.

To solve the abovementioned problems, the air intake system according to this invention for the multi-cylinder engine, comprising air intake passages each leading to the combustion chamber of each cylinder and each provided with a throttle valve within, communicating passages each connecting one of said intake passages, at its portion downstream of said throttle valve, with a pressure regulating tank, and control valves each installed within one of said communicating passages to be operated so that their opening may be increased within a low opening range of said throttle valve, is characterized in that a single bypass passage is provided to connect any one of said air intake passages, at its portion upstream of said throttle valve, with the pressure regulating tank, and an open-close valve second control valve installed within said bypass passage for controlling air supply according to engine operating conditions when the engine is running under low load operating conditions including idling.

The open-close valve may remain opened within the high opening range of the throttle valve. The low opening range of the throttle valve where the opening of the control valve is increased includes the state of the throttle valve closed for idling, etc.

In the air intake system according to this invention, within the low opening range of the throttle valve for controlling the air amount to be taken in, the intake passage portion downstream of each throttle valve for multiple cylinders is communicated with the pressure regulating tank through a control valve to reduce the pressure fluctuation and to average mixture concentration within the air intake passage, and therby to stabilize combustion.

If, in this state with the throttle valve closed, the open-close valve provided within the bypass passage is opened according to the operating conditions of the engine, since the air intake passage portion upstream of the throttle valve is communicated with the pressure regulating tank through a communicating passage and, further, this pressure regulating tank is communicated with the air intake passage downstream of each throttle valve for multiple cylinders through the bypass passage, a definite amount of air can be supplied to the combustion chamber of each cylinder through the bypass passage and the pressure regulating tank.

In the air intake system for the multi-cylinder engine according to this invention, since a portion of any one air intake passage upstream of this throttle valve for each cylinder is communicated with the pressure regulating tank through a single bypass passage utilizing the pressure regulating tank communicated with the air intake passages for multiple cylinders at portions downstream of their respective throttle valves, which bypass passage is provided with an open-close valve for opening and closing this bypass passage according to the operating conditions of the engine to control air supply at least while the throttle valves are closed, it becomes possible to supply air according to the enigne operating conditions while throttle valves are closed and to make the system simple and inexpensive, by communicating a portion of any one intake passage upstream of its throttle valve with the pressure regulating tank through a single bypass passage provided with a single open-close valve.

Further, since the control valves provided midway of the communicating passages connected with the pressure regulating tank are constructed to be opened wider within the low opening range of the throttle valves, these control valves satisfactorily functions to stabilize combustion and to supply air to the operating conditions of the engine when the throttle valves are closed not with standing its simple structure wherein a single bypass passage is connected to the pressure regulating tank.

Now embodiments of the present invention are described in detail, referring to the attached drawings:
Fig. 1 is a sectional view of an air intake system for a multi-cylinder combustion engine,

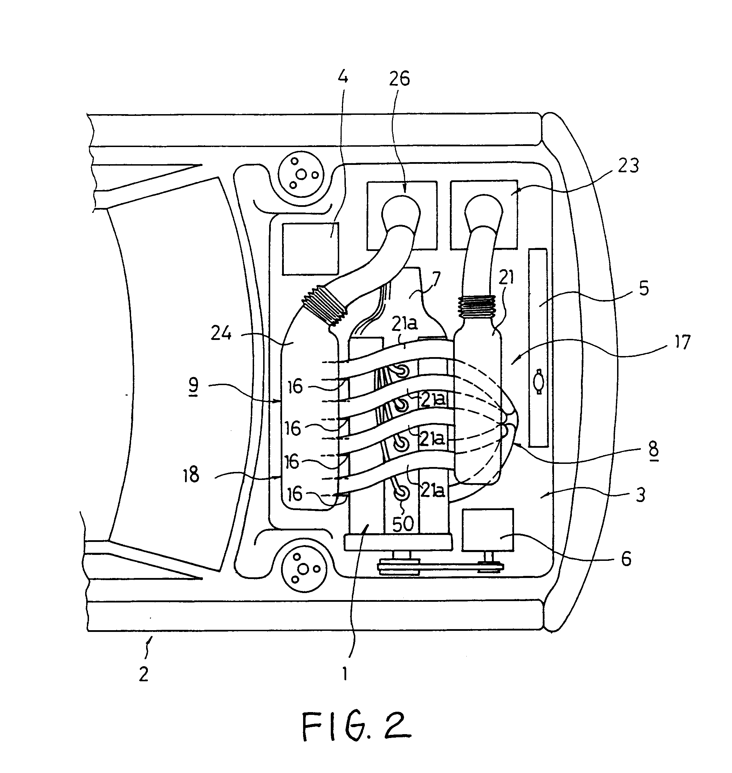

Fig. 2 is a plan view of an automotive engine provided with an air intake system according to the invention,

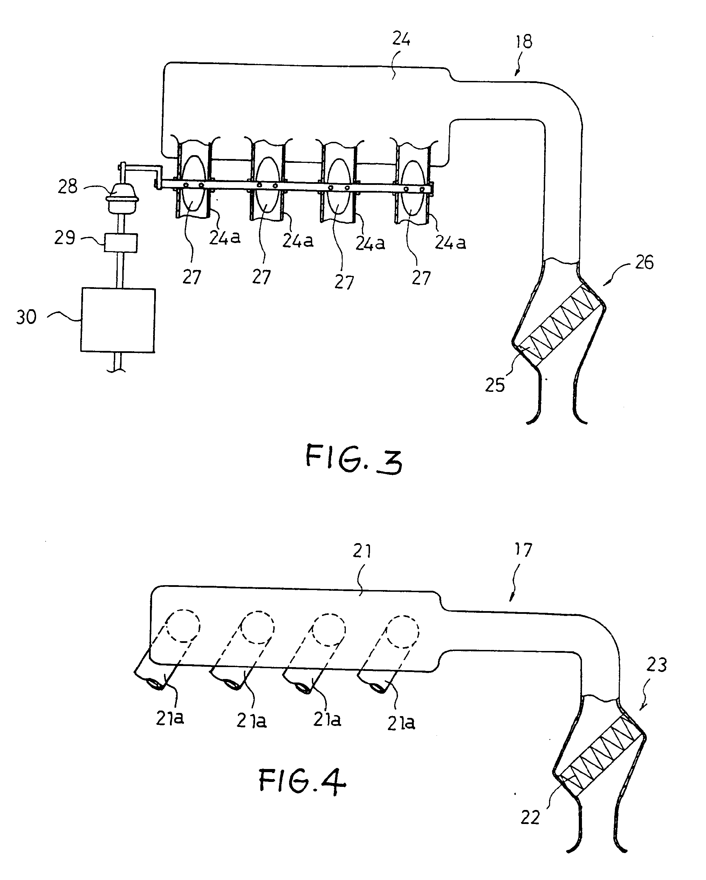

Fig. 3 shows a high speed intake passage portion of the air intake system,
Fig. 4 shows a low speed intake passage portion of the air intake system,

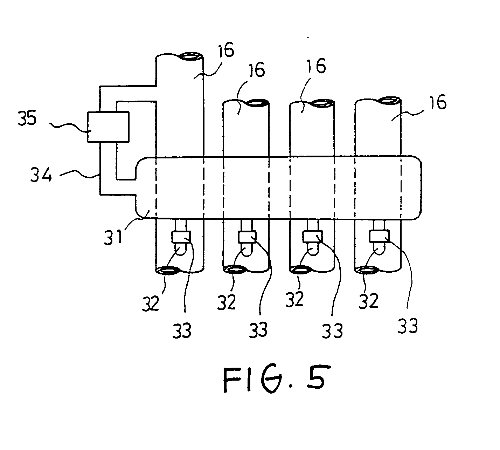

Fig. 5 shows the connection of the pressure regulating tank to the air intake system and
Fig. 6 to 16 show various alternative embodiments of the air intake system.

The engine block 1 of a 4-stroke 4-cylinder engine is mounted in the engine compartment 3 located at the front portion of the automobile 2. In the engine compartment 3 there are also arranged a battery 4, a radiator 5 and an alternator 6, a transmission 7, an exhaust system 8 and an air intake system 9 both connected to the engine block 1.

The engine is a 4-cylinder engine comprising four combustion chambers each having a piston 10, a cylinder 11 and a cylinder head 12 with a crankshaft (not shown) disposed transversely of the vehicle. The combustion chamber 13 of each cylinder is provided with an ignition plug and is connected, at its intake and exhaust ports, with the intake and exhaust passages 14 and 15 respectively through the intake and exhaust valves 14a and 15a.

The air intake passage 14 is composed of multiple common intake passage portions 16 which all start from all cylinder heads 12 and all operative throughout the whole engine operating range, further a low speed intake passage portion 17 operative within the low speed engine operating range, and a high speed intake passage portion 18 operative within the high speed engine operating range.

Each of the common intake passage portions 16 is provided with an electronic fuel injection nozzle 19 for injecting fuel according to a signal from the computer M, and, at its portion upstream of this electronic fuel injection nozzle 19, is provided with a throttle valve 20 which is operated by the car driver to control the engine output. The information about the opening of this throttle valve is sent to the computer M by the valve opening detecting sensor K1.

The low speed intake passage portion 17 is provided with a surge tank 21 and is branched into branch pipes 21a for each cylinder through this surge tank 21, and its upstream end is communicated with the atmosphere through a single intake pipe 23 provided with an air cleaner chamber having a filter 22 which serves also to reduce air intake noises. The length of the air intake passage 14 from the intake point to the surge tank 21 is determined to suit the low speed engine operation.

Similary, the high speed intake passage portion 18 is provided with a surge tank 24 and is branched into branch pipes 24a for each cylinder through this surge tank 24 each of which branch pipes 24a is joined with the corresponding branch pipes 21a, and its upstream end is communicated with the atmosphere through a single intake pipe 26 provided with an air cleaner chamber having a filter 25 which serves also to reduce air intake noises. The length of the air intake passage 14 from the intake point to the surge tank 24 is determined to suit the high speed engine operation.

Near the joining portion of the high speed intake passage portion 18 with the low speed intake passage portion 17, there is provided an intake control valve 27, which closes the high speed intake passage portion 18 within the low speed engine operating range to intake air only through the low speed intake passage portion 17 and, on the other hand, opens the high speed intake passage portion 18 within the high speed engine operating range to intake air through the high speed intake passage portion 18 without closing the low speed intake passage portion 17.

This intake control valve 27 is driven by the diaphragm 28 connected, through a change valve 29, with a vacuum tank 30 which is in turn connected with the pressure regulating tank 31. The change valve 29 is operated according to the signal from the computer M either to leave the diaphragm 28 open to the atmosphere and inoperative so that the intake control valve 27 may close the high speed intake passage portion 18 within the low speed engine operating range, or to communicate the diaphragm with the vacuum tank 30 so that the intake control valve 27 may open the high speed intake passage portion 18 within the high speed engine operating range.

The pressure regulating tank 31 is connected to each common intake passage portion 16 at the portion downstream of the throttle valve 20 through communicating passages 32 each provided midway with a control valve 33 whose opening is increased within the low opening range of the throttle valve 20 including the closed state of the throttle valve 20 for idling, etc.

Further, the pressure regulating tank 31 is communicated with any one of the common intake passage portions 16 for multiple cylinders at its portion upstream of the throttle valve 20 through a single bypass passage 34 provided midway with an open-close valve 35 which opens or closes the bypass passage 34 according to the operating conditions of the engine. The opening area of the valve 35 is variable according to the operating conditions of the engine. So air supply is controlled and the idling speed is maintained constant. This control valve 35 controls air supply at least while the throttle valve 20 is closed, and is closed within the high speed engine operating range.

The operating conditions of the engine is judged by the computer M on the basis of engine speed information obtained from the number of crankshaft revolution by an engine speed detecting sensor K2, cylinder temperature information obtained by a temperature detecting sensor K3 provided on a cylinder 11, throttle valve opening information obtained by the abovementioned valve opening detecting sensor K1, and intake air amount information obtained by a vacuum sensor K4 provided on the pressure regulating tank 31. This vacuum sensor K4 obtains intake air amount on the basis of the vacuum pressure without disadvantage of impeding air intake by the measuring means as is the case with an air flow meter which measures air flow utilizing the pressure of intake air working on the measuring plate to push open it. Besides, when the intake system has two intake pipes 23 and 26 for the low speed intake passage portion 17 and the high speed intake passage portion 18 as seen in this embodiment, the vacuum sensor K4 may be installed anywhere downstream of the joining point of the intake air, without being limited to somewhere within the pressure regulating tank 31, whereby an exact intake air amount can be easily obtained by a single vacuum sensor without further treatment such as averaging of air intake amounts.

Next, let's describe the operation of the engine. While the engine is running under low operating conditions with a small throttle valve opening including idling, the intake control valve 27 closes the high speed intake passage portion 18 according to the signal of the computer M communicating the low speed intake passage portion 17 with the common intake passage portions 16, while the opening of the control valve 33 is increased and each air intake passage downstream of the throttle valve 20 is communicated with the pressure regulating tank 31 through the communicating passage 32 to reduce the pressure fluctuation and to average mixture concentration within the air intake passage, and thereby to stabilize combustion.

In this state with the throttle valve 20 closed, e.g., while idling, when the open-close valve 35 is opened to an opening corresponding to the operating conditions of the engine according to the signal of the computer, the portion of the common intake passage portions 16 upstream of the throttle valve 20 is communicated with the common intake passage position 16 downstream of the throttle valve 20 through the communicating passage 32, the pressure regulating tank 31 and the bypass passage 34 to make the idling speed constant, to supply a definite amount of air appropriate to, e.g., low temperature of the engine.

Further, when the throttle valve 20 is widely opened to increase the engine output, the opening of the control valve 33 is reduced while the open-close valve 35 is closed, and the flow of the mixture into the pressure regulating tank 31 while the throttle valve 20 is opened, and also the flow of the mixture from the pressure regulating tank 31 into the combustion chamber 13 while the throttle valve 20 is opened are both restricted to improve operational responsiveness of the throttle valve 20. If the engine speed exceeds a predetermined limit here, the change valve 29 operates according to the signal from the computer M to open the intake control valve 27 through the diaphragm 28 to make it possible to take air into the passage portions 16 through the high speed intake passage portion 18.

As described above, when the throttle valve 20 is widely opened, the open-close valve 35 is closed, and a definite amount of air is supplied through the common intake passage portions 16 without flowing through the bypass passage 34 and the pressure regulating tank 31.

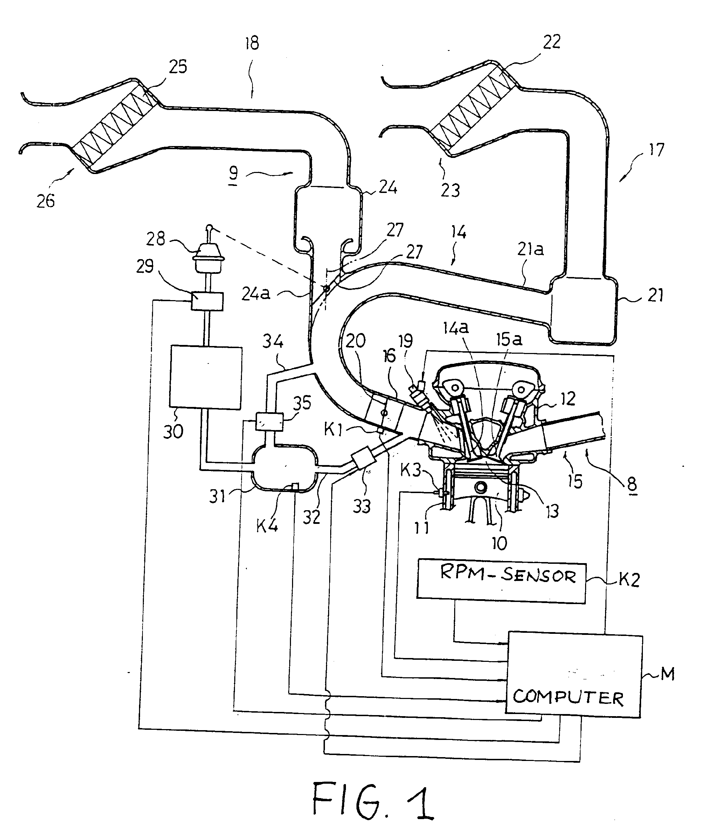

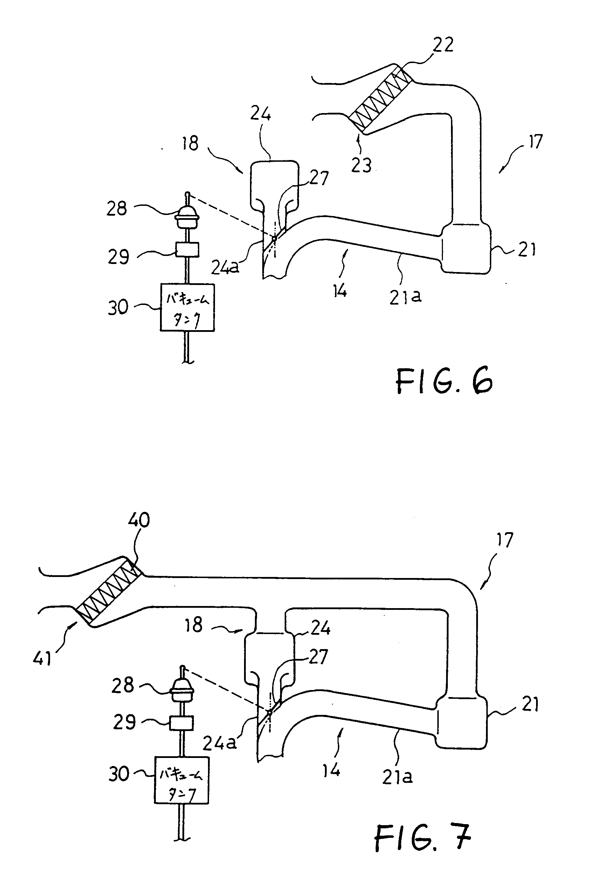

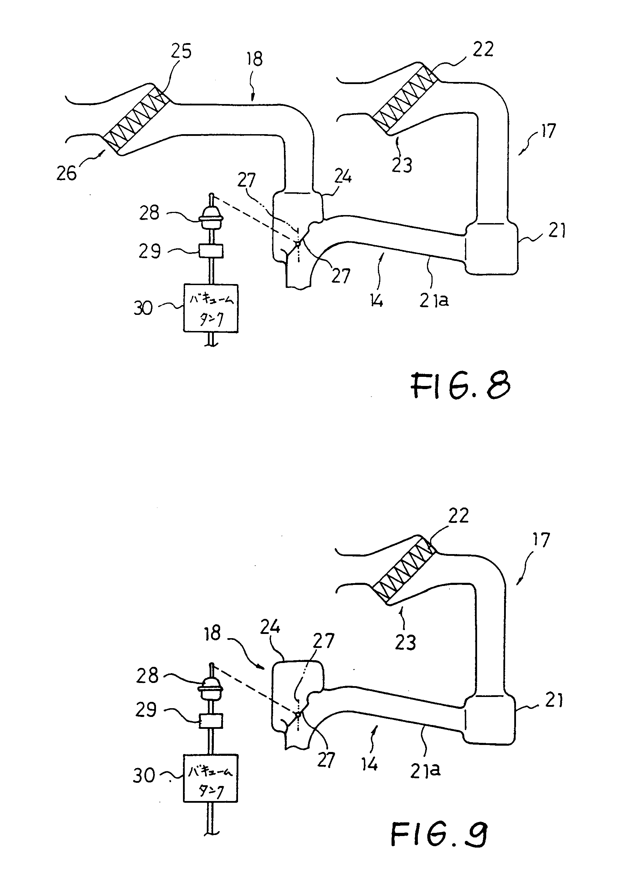

Figs. 6 through 16 show other embodiments of this invention. In the embodiments shown in Fig. 6 and 7, the intake control valve 27 is constructed in the same manner as in the embodiment shown in Fig. 1, but, in the embodiment shown in Fig. 6, the high speed intake passage portion 18 is provided with only the surge tank 24 without the intake pipe 26 and air is taken in through the low speed intake passage portion 17 and, in the embodiment shown in Fig. 7, the high speed intake passage portion 18 and the low speed intake passage portion 17 are both connected to a common intake tube 41 provided with a filter 40, and air is taken in through this intake tube 41.

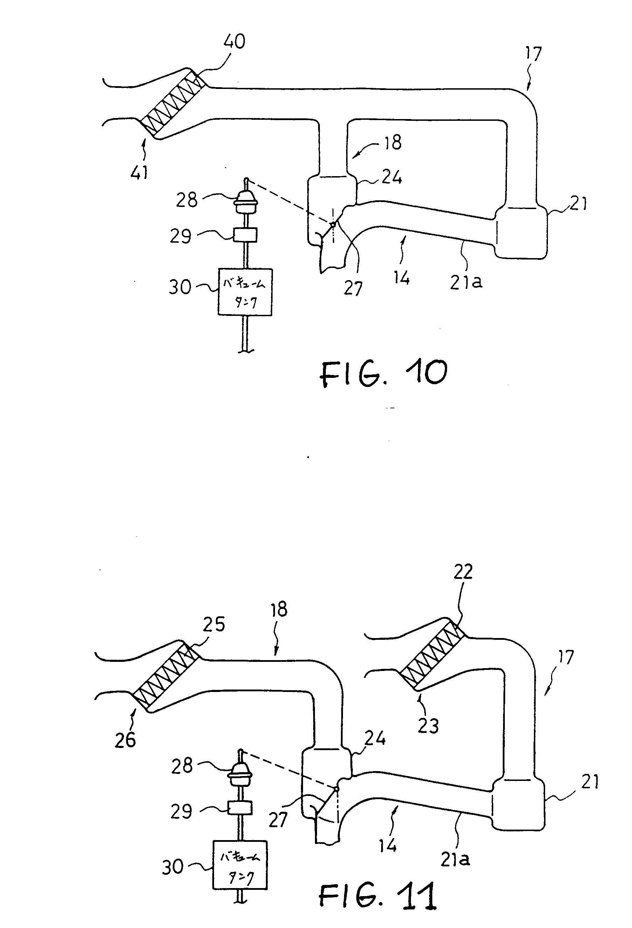

In the embodiments shown in Figs. 8 through 10, the intake control valve 27 is constructed in the same manner as in the embodiment shown in Fig. 1, but the surge tank 24 of the high speed intake passage portion 18 is directly connected with the branch pipes 21a of the low speed intake passage portion 17. In the embodiment of Fig. 8, the intake pipes 23 and 26 for the low speed intake passage portion 17 and the high speed intake passage portion 18, respectively, are provided independently of each other in the same manner as in Fig. 1, in the embodiment of Fig. 9, the high speed intake passage portion 18 is provided with only a surge tank 24 without its intake pipe, and, in the embodiment shown in Fig. 10, the low speed and high speed intake passage portions 17 and 18 are both connected with a common intake pipe 41.

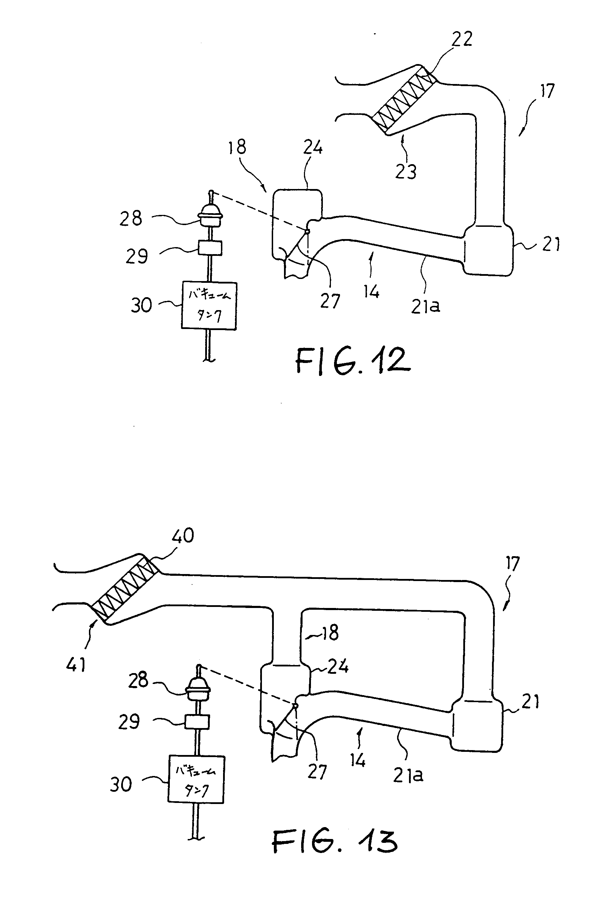

In the embodiments shown in Figs. 11 through 13, the intake control valve 27 functions to close the low speed intake passage portion 17 while it opens the high speed intake passage portion 18 and to open the low speed intake passage portion 17 while it closes the high speed intake passage portion 18, and the surge tank 24 of the high speed intake passage portion 18 is directly connected with the branch pipes 21a of the low speed intake passage portion 17 as in the embodiments shown in Figs. 8 through 10. In the embodiment of Fig. 11, the intake pipes 23 and 26 for the high speed intake passage portion 18 and the low speed intake passage portion 17, respectively, are provided independently of each other in the same manner as in Fig. 1, in the embodiment of Fig. 12, the high speed intake passage portion 18 is provided with only a surge tank 24 without its intake pipe, and, in the embodiment shown in Fig. 12, the low speed and high speed intake passages 17 and 18 are both connected with a common intake pipe 41.

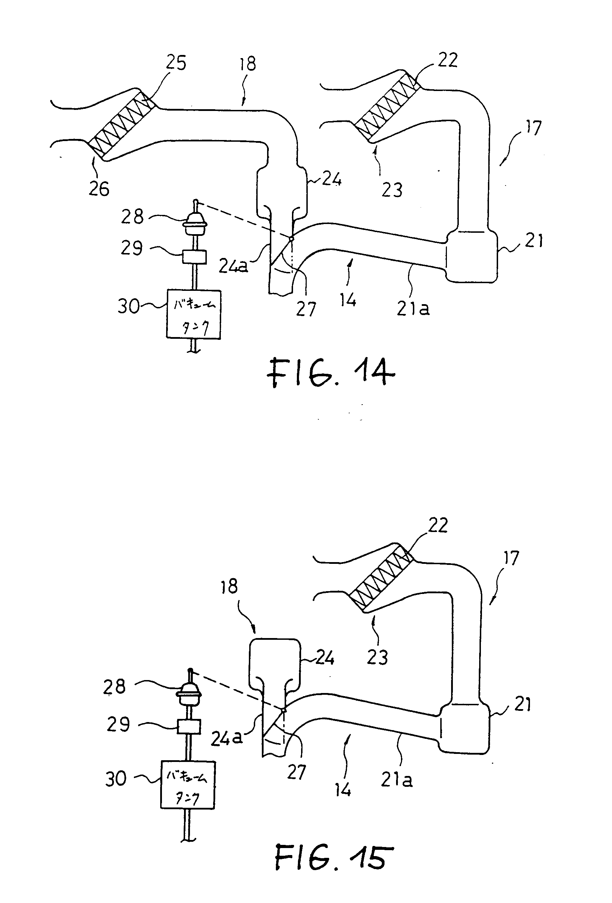

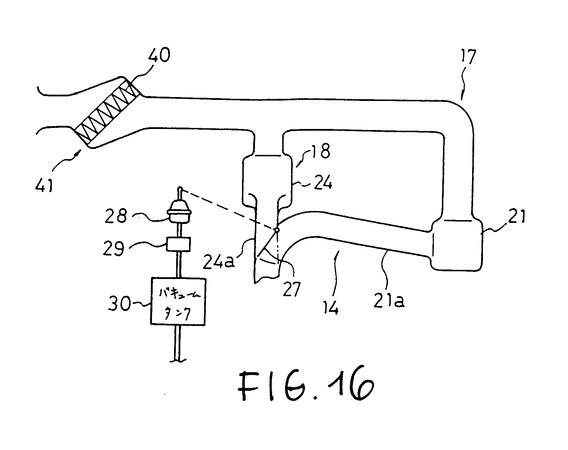

In the embodiments shown in Figs. 14 through 16, the intake control valve 27 functions in the same manner as in the embodiments of Figs. 11 through 13, but the surge tank 24 for these embodiments is connected with the branch pipes 21a through the branch pipes 24a as in the embodiments of Fig. 1. In the embodiment of Fig. 14, the intake pipes 23 and 26 for the low speed intake passage portion 17 and the high speed intake passage portion 18, respectively, are provided independently of each other in the same manner as in Fig. 1, in the embodiment of Fig. 15, the high speed intake passage portion 18 is provided with only a surge tank 24 without its intake pipe, and, in the embodiment shown in Fig. 16, the low speed and high speed intake passages 17 and 18 are both connected with a common intake pipe 41.

## Claims

1. An air intake system for a multi-cylinder combustion engine comprising air intake passages (16, 17, 18) each leading to the combustion chamber (13) of each cylinder (11) and each provided with a throttle valve (20), communicating passages (32) each connecting one of said intake passages (16) at its portion downstream of said throttle valve (20), with a pressure regulating tank (31) and first control valves (33) each installed within each of said communicating passages (32) to be operated so that their openings may be increased within a low opening range of said throttle valves (20), characterized in that a single bypass passage (34) is provided to connect any one of said air intake passages at its portion upstream of said throttle valve (20), with the pressure regulating tank (31) and a second control valve (35) installed within said bypass passage (34) for controlling air supply according to engine operating conditions when the engine is running under low load operating conditions including idling.

2. The system of claim 1, wherein said first control valves (33) and said second control valve (35) are controlled by a computer in response to a plurality of engine operating conditions provided by sensors (K1 to K4).

3. The system of claim 1 or 2, wherein the air supply through the bypass system (31, 32, 33, 34, 35) is controlled by increasing the opening of said first control valves (33) when the engine is running under low load operating conditions not including idling and decreasing the operating of said second control valve (35),

4. The system of claims 1 to 3, wherein the air supply through said bypass system (31, 32, 33, 34, 35) is controlled by increasing the opening of said second control valve (35) when the engine is idling to supply an appropriate amount of air.

5. The system of claims 1 to 4, wherein the opening of said first control valves (33) is reduced and the second control valve (35) is closed when said throttle valve (20) is opened exceeding a predetermined value.

6. The system of claims 1 to 5, wherein said air intake passage system (14) comprises a low speed intake passage portion (17) and a high speed passage portion (18) each comprising a surge tank (21, 14) and wherein a valve means (27) is provided to activate said high speed passage position (18) in response to crank shaft speed.

7. The system of claim 6, wherein said valve means (27) is operated by a vacuum motor (28) which is connected to said pressure regulating tank (38).

8. The system of claims 6 or 7, wherein both said surge tanks (21, 24) are provided each with a separate intake pipe (23, 26).

9. The system of claims 6 or 7, wherein said surge tank (21) of said low speed passage portion (17) is provided with an intake pipe (23).

10. The system of claim 6 or 7, wherein both said surge tanks (21, 24) are connected to a common intake pipe (41).

11. The system of claims 6 to 10, wherein said surge tank (24) of said high speed passage portion (18) is connected to said low speed passage portion (17) via branch pipes (24a).

12. The system of claims 6 to 10, wherein said surge tank (24) of said high speed passage portion (18) is directly connected to said low speed passage portion (17).

13. The system of claims 6 to 12, wherein said valve means (27) is designed to alternatively close the low or high speed passage portion (17, 18).

## Patentansprüche

1. Lufteinlaßsystem für eine Mehrzylinder-Brennkraftmaschine mit mehreren Lufteinlaßkanälen (16,17,18), von denen jeder in die Brennkammern (13) eines Zylinders (11) führt und mit einem Drosselventil (20) versehen ist, mit Verbindungskanälen (32), jeweils für den Anschluß eines Einlaßkanals (16) an einem Abschnitt stromab des Drosselventils (20), mit einem Druckregeltank (31) und ersten Steuerventilen (33), von denen jedes in einem der Verbindungskanäle (32) angeordnet ist und derart betätigt wird, daß ihre Öffnungsquerschnitte in einem unteren Öffnungsbereich der Drosselventile (20) vergrößert werden kann, dadurch gekennzeichnet, daß ein einziger Bypaßkanal (34) für den Anschluß eines jeden Lufteinlaßkanals an einem Abschnitt stromauf des Drosselventils (20) vorgesehen ist, wobei der Druckregeltank (31) und ein zweites Steuerventil (35) in dem Bypaßkanal (34) vorgesehen sind, um den Luftzutritt entsprechend den Motorbetriebsbedingungen zu steuern, wenn der Motor mit niedriger Last einschließlich Leerlauf arbeitet.

2. System nach Anspruch 1, wobei die ersten Steuerventile (33) und das zweite Steuerventil (35) von einem Computer in Abhängigkeit von mehreren Motorbetriebsbedingungen gesteuert werden, die von Sensoren (K1 bis K4) erfaßt werden.

3. System nach Anspruch 1 oder 2, wobei der Lufteintritt durch das Bypaßsystem (31,32,33,34,35) durch Vergrössern des Öffnungsquerschnitts der ersten Steuerventile (33) gesteuert wird, wenn der Motor bei geringer Last ausschließlich in Leerlauf arbeitet und der Öffnungsquerschnitt des zweiten Steuerventils (35) verringert wird.

4. System nach den Ansprüchen 1 bis 3, wobei der Lufteintritt durch das Bypaßsystem (31,32,33,34,35) durch Vergrößern des Öffnungsquerschnitts des zweiten Steuerventils (35) gesteuert wird, wenn der Motor im Leerlauf arbeitet, um ein ausreichendes Luftvolumen zu liefern.

5. System nach den Ansprüchen 1 bis 4, wobei der Öffnungsquerschnitt der ersten Steuerventile (33) verringert und das zweite Steuerventil (35) geschlossen wird, wenn das Drosselventil (20) über einen vorbestimmten Wert hinaus geöffnet wird.

6. System nach den Ansprüchen 1 bis 5, wobei das Lufteinlaßkanalsystem (14) einen Einlaßkanalabschnitt (17) für niedrige Drehzahl und einen Kanalabschnitt (18) für hohe Drehzahl aufweist, in denen jeweils ein Ausgleichstank (21, 24) vorgesehen ist, und wobei ein Ventil (27) vorgesehen ist, um abhängig von der Kurbelwellendrehzahl den Kanalabschnitt (18) für hohe Drehzahl zu aktivieren.

7. System nach Anspruch 6, wobei das Ventil (27) von einem Vakuummotor (28) betätigt wird, der an den Druckregeltank (31) angeschlossen ist.

8. System nach Anspruch 6 oder 7, wobei beide Ausgleichstanks (21, 24) jeweils mit einer getrennten Einlaßleitung (23, 26) versehen sind.

9. System nach Anspruch 6 oder 7, wobei der Ausgleichstank (21) für den Kanalabschnitt (17) für niedrige Drehzahl mit einer Einlaßleitung (23) versehen ist.

10. System nach Anspruch 6 oder 7, wobei beide Ausgleichstanks (21, 24) an eine gemeinsame Einlaßleitung (41) angeschlossen sind.

11. System nach den Ansprüchen 6 bis 10, wobei der Ausgleichstank (24) für den Kanalabschnitt (18) für hohe Drehzahl mit dem Kanalabschnitt (17) für niedrige Drehzahl über Zweigleitungen (24a) verbunden ist.

12. System nach den Ansprüchen 6 bis 10, wobei der Ausgleichstank (24) für den Kanalabschnitt (18) für hohe Drehzahl direkt mit dem Kanalabschnitt (17) für niedrige Drehzahl verbunden ist.

13. System nach den Ansprüchen 6 bis 12, wobei das Ventil (27) alternativ den Kanalabschnitt (17, 18) für niedrige oder hohe Drehzahl schließt.

## Revendications

1. Système d'admission d'air pour un moteur à combustion interne à plusieurs cylindres comprenant des passages d'admission d'air (16,17,18) conduisant chacun à la chambre de combustion (13) de chaque cylindre (11) et équipés chacun d'un papillon (20), de passages de communication (32) dont chacun raccorde l'un desdits passages d'admission (16) dans sa partie située en aval dudit papillon (20), avec une chambre de régulation de pression (31), et des premières soupapes de commande (33) installées chacune dans chacun desdits passages de communication (32) pour être actionnées de telle sorte que leur ouverture peut être accrue dans une faible gamme d'ouverture desdits papillons (20), caractérisé en ce qu'un passage de dérivation unique (34) est prévu pour raccorder l'un quelconque desdits passages d'admission d'air au niveau de sa partie située en amont dudit papillon (20) avec la chambre de régulation de pression (31), la chambre de régulation de pression (31), et une seconde soupape de commande (35) est installée dans ledit passage de dérivation (34) pour commander l'alimentation en air en fonction des conditions de fonctionnement du moteur lorsque ce dernier tourne dans des conditions de fonctionnement sous faible charge y compris le ralenti.

2. Système selon la revendication 1, dans lequel lesdits premières soupapes de commande (32) et ladite seconde soupape de commande (35) sont commandées par un ordinateur en réponse à une pluralité de conditions de fonctionnement du moteur fournies par des capteurs (K1 à K4).

3. Système selon la revendication 1 ou 2, dans lequel l'alimentation en air par l'intermédiaire du système de dérivation (31,32,33,34,35) est commandée par accroissement de l'ouverture desdites premières soupapes de commande (33) lorsque le moteur fonctionne dans des conditions de fonctionnement sous faible charge, n'incluant pas le ralenti, et par réduction de l'ouverture de ladite seconde soupape de commande (35).

4. Système selon les revendications 1 à 3, dans lequel l'alimentation en air par l'intermédiaire dudit système de dérivation (31,32,33,34,35) est commandée par accroissement de l'ouverture de ladite seconde soupape de commande (35) lorsque le moteur fonctionne au ralenti, pour l'envoi d'une quantité d'air appropriée.

5. Système selon les revendications 1 à 4, dans lequel l'ouverture desdites premières soupapes de commande (33) est réduite et la seconde soupape de commande (35) est fermée lorsque ledit papillon des gaz (20) est ouvert au-delà d'une valeur prédéterminée.

6. Système selon les revendications 1 à 5, dans lequel ledit système (14) du passage d'admission d'air comprend une partie pour faible vitesse (17) et une partie pour grande vitesse (18), contient un réservoir d'équilibrage (21,24), et dans lequel des moyens de soupape (27) sont prévus pour activer ladite partie de passage pour grande vitesse (18) en réponse à la vitesse du vilebrequin.

7. Système selon la revendication 6, dans lequel lesdits moyens de soupape (27) sont actionnés par un actionneur à dépression (28), qui est raccordé audit réservoir de régulation de pression (31).

8. Système selon les revendications 6 ou 7, dans lequel lesdits deux réservoirs d'équilibrage (21,24) sont équipés chacun d'une tubulure d'admission séparée (23,26).

9. Système selon la revendication 6 ou 7, dans lequel ledit réservoir d'équilibre (21) de ladite partie de passage pour faible vitesse (17) est équipé d'une tubulure d'admission (23).

10. Système selon la revendication 6 ou 7, dans lequel lesdits deux réservoirs d'équilibrage (21,24) sont raccordés à une tubulure commune d'admission (41).

11. Système selon les revendications 6 à 10, dans lequel ledit réservoir d'équilibrage (24) de ladite partie de passage pour grande vitesse (18) est raccordé à ladite partie de passage pour faible vitesse (17) par l'intermédiaire de tubulures de dérivation (24a).

12. Système selon les revendications 6 à 10, dans lequel ledit réservoir d'équilibrage (24) de ladite partie de passage pour grande vitesse (18) est raccordé directement à ladite partie de passage pour faible vitesse (17).

13. Système selon les revendications 6 à 12, dans lequel ladite soupape (27) est agencée de manière à fermer alternativement la partie de passage pour faible vitesse ou la partie pour grande vitesse (17,18).
